# FASCICULE DE BREVET EUROPEEN

(11) **EP 2 516 181 B1**
(45) Date de publication et mention de la délivrance du brevet: **06.11.2013**
(21) Numéro de dépôt: 10803073.5
(22) Date de dépôt: 17.12.2010
(51) Int. Cl.: B60C 11/12

(54) **BANDE DE ROULEMENT POUR PNEUMATIQUE COMPORTANT DES CAVITÉS ET DES INCISIONS**
REIFENPROFIL MIT VERTIEFUNGEN UND EINSCHNITTEN
TYRE TREAD HAVING CAVITIES AND INCISIONS

(30) Priorité: 22.12.2009 FR 0959339
(43) Date de publication de la demande: 31.10.2012
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: BERGER, Eric, F-63410 Loubeyrat (FR); GUICHON, Cyril, 63460 Beauregard-Vendon (FR)
(74) Mandataire: Diernaz, Christian
(86) Numéro de dépôt international: PCT/EP2010/070037
(87) Numéro de publication internationale: WO 2011/076676

(56) Documents cités:
- EP-A1- 1 938 939
- JP-A- 2 310 108
- JP-A- 2001 063 323

## Description

### DOMAINE DE L'INVENTION

L'invention concerne une bande de roulement pour pneumatique et plus particulièrement une bande de roulement comportant une pluralité de cavités disposées à l'intérieure de ladite bande de roulement.

### ETAT DE LA TECHNIQUE

Le document JP2001063323 divulgue une bande de roulement comportant une pluralité de blocs s'étendant principalement selon une direction circonférentielle, chaque bloc ayant globalement une forme parallélépipédique. Chaque bloc comprend une face de contact destinée à être en contact avec une chaussée et une pluralité de faces latérales coupant ladite face de contact.

Un bloc disposé dans la partie centrale de la bande de roulement, comprend une cavité s'étendant principalement selon la direction circonférentielle.

La cavité dans le bloc est moulée à l'aide d'un élément moulant. Cet élément moulant est présent dans la bande de roulement au moment du moulage et de la vulcanisation de ladite bande de roulement, puis retiré une fois la bande de roulement vulcanisée. Lors de son retrait, l'élément moulant laisse dans le bloc une empreinte volumique correspondant à la cavité.

Cependant, avec les procédés de fabrication actuellement utilisés, l'élément moulant forme également une incision supplémentaire dans la bande de roulement. Cette incision supplémentaire s'étend dans la hauteur du bloc et débouche à la fois dans la cavité et au niveau de la face de contact du bloc. Cette incision s'étend principalement dans la même direction que la cavité, c'est-à-dire dans la direction circonférentielle.

Comme l'incision débouche sur la face de contact du bloc, la rigidité globale du bloc diminue. Dans le cas où le bloc est soumis à de très fortes pressions, celui-ci peut se tordre ce qui entraîne une diminution de l'aire de contact avec la chaussée et en conséquence une perte d'adhérence entre la bande de roulement et la chaussée.

Ce phénomène, également appelé flambage, est d'autant plus important lorsque le bloc a la forme d'une lame c'est-à-dire lorsque le bloc présente un grand élancement. Par grand élancement, on entend ici que le bloc a une grande longueur et une grande hauteur pour une largeur faible relativement à cette hauteur et à cette largeur.

L'invention vise alors à résoudre le problème de pourvoir au moins un bloc d'une ou plusieurs cavités internes tout en limitant la perte de rigidité de ce bloc pour éviter tout risque de flambage.

### DEFINITIONS

Par « pneumatique », on entend tous les types de bandages élastiques soumis au cours d'un roulage à une pression interne ou non.

Par « bande de roulement d'un pneumatique », on entend une quantité de composition dé caoutchouc délimitée par des surfaces latérales et par deux surfaces principales dont une est destinée à entrer en contact avec un sol lorsque le pneumatique roule.

Par « surface de roulement », on entend la surface formée par les points de la bande de roulement du pneumatique qui entrent en contact avec le sol lorsque le pneumatique roule.Par « bloc » (« rib » en anglais), on entend un élément en relief délimité par des découpures.

Par « cavité » (« cavity » en anglais), on entend une partie en creux délimitée par une paroi de matière.

Par direction circonférentielle, on entend une direction tangente à un cercle dont le centre est sur l'axe de rotation d'un pneumatique pourvu de la bande de roulement.

Par direction transversale, on entend une direction parallèle à l'axe de rotation dudit pneumatique.

### RESUME DE L'INVENTION

L'invention concerne une bande de roulement pour pneumatique comportant une pluralité de blocs délimités par des découpures, chaque bloc ayant une longueur et chaque bloc ayant une largeur déterminée entre une première face latérale du bloc et une seconde face latérale du bloc, ladite largeur étant inférieure à ladite longueur. Au moins un bloc parmi la pluralité de blocs comprend au moins une cavité disposée à l'intérieur dudit bloc, ladite cavité s'étendant principalement dans la longueur dudit bloc. La bande de roulement comprend une incision s'étendant principalement dans la longueur dudit bloc, ladite incision débouchant sur la première face latérale du bloc et ladite incision débouchant dans la cavité en formant une ouverture, la longueur de l'ouverture déterminée dans la longueur du bloc correspondant au moins à 80% de la longueur de la cavité déterminée dans ladite longueur dudit bloc.

L'incision et l'ouverture formée par cette incision sur la paroi délimitant la cavité, facilitent le retrait de l'élément moulant hors du bloc tout en limitant les risques d'arrachement de la gomme lors de ce retrait. Dans l'invention, l'incision ne débouche pas sur la face de contact du bloc mais sur une face latérale de ce bloc. Ainsi, l'incision s'étend selon une direction ayant composante non nulle dans un plan parallèle à la face de contact du bloc. Lorsque le bloc est soumis à une compression, les parois délimitant l'incision entrent en contact et l'incision se ferme. La rigidité du bloc est alors maintenue au cours d'un roulage de la bande de roulement.

Dans un mode de réalisation préférentiel, l'épaisseur de matière entre la cavité et la seconde face latérale du bloc est supérieure ou égale à 1/3 de la largeur du bloc.

L'élément moulant est monté sur un moule de vulcanisation. Lorsque la presse contenant le moule s'ouvre pour permettre le retrait de la bande de roulement ainsi moulée et vulcanisée, l'élément moulant effectue un mouvement de déplacement relatif selon une direction radiale par rapport à l'axe du pneu et donc par rapport au bloc. Au cours de l'opération de démoulage, l'élément moulant exerce une forte sollicitation sur la partie du bloc située entre la cavité et la seconde face latérale. En conservant une épaisseur de matière caoutchoutique minimale entre la cavité et cette seconde face latérale, on évite que l'élément moulant ne vienne arracher tout ou partie du bloc lorsque ledit élément moulant se retire de la bande de roulement.

Dans un mode de réalisation préférentiel, l'incision forme un angle compris entre 30° et 60° avec une direction perpendiculaire à ladite première face latérale du bloc et, en partant de la cavité, l'incision s'étend selon une direction ayant une composante radiale dirigée vers ladite face de contact.

Ainsi, on limite d'avantage les risques d'arrachement de la gomme dans le bloc, lors du retrait de l'élément moulant.

Dans une variante de réalisation, la cavité comporte une partie en forme de rampe disposée dans le prolongement de la fente.

On facilite le retrait de l'élément moulant.

Dans une variante de réalisation, l'incision a un profil ondulé sur la première face latérale.

L'incision est délimitée par une première surface et une seconde surface opposée à la première surface. Par ce profil ondulé, on facilite le blocage de mouvements relatifs de la première surface de l'incision par rapport à la seconde surface de l'incision, dans la longueur du bloc.

Préférentiellement ou dans une autre variante de réalisation, l'incision a un profil ondulé dans un plan orthogonal à la première face latérale.

Par ce profil ondulé, on facilite le blocage de mouvements relatifs de la première surface de l'incision par rapport à la seconde surface de l'incision, dans la largeur du bloc.

Dans un mode de réalisation préférentiel, toutes les incisions des blocs de la pluralité de blocs débouchent d'un même côté par rapport auxdits blocs.

L'invention peut alors s'appliquer pour des pneumatiques directionnels comprenant un sens préférentiel de roulage, ce sens préférentiel de roulage étant généralement indiqué sur le pneumatique.

Dans une variante de réalisation, les incisions des blocs de la pluralité de blocs débouchent de manière alternée soit d'un premier côté par rapport auxdits blocs soit d'un second côté par rapport auxdits blocs.

L'invention peut alors s'appliquer pour des pneumatiques non directionnels.

Dans un mode de réalisation préférentiel, chaque bloc de la pluralité de blocs a une hauteur déterminée, ladite hauteur étant supérieure ou égale à trois fois la largeur dudit bloc.

Dans un mode de réalisation préférentiel, les blocs de la pluralité de blocs forment des lames dont la longueur est orientée selon une direction transversale.

Par lame, on entend que le bloc présente un grand élancement.

Un autre objet de l'invention concerne un pneumatique comprenant une bande de roulement telle qu'elle a été décrite ci-dessus.

Dans un mode de réalisation préférentiel, le pneumatique est un pneumatique neige.

Par « pneumatique neige » (« snow tyre » ou « winter tyre » en anglais), on entend un pneumatique repéré par une inscription M+S ou M.S. ou encore M&S, marquée sur au moins un des flancs du pneumatique. Ce pneumatique neige se caractérise par un dessin de la bande de roulement et une structure destinés avant tout à assurer, dans la boue et la neige fraîche ou fondante, un comportement meilleur que celui d'un pneumatique du type routier (en anglais appelé « road type tyre ») conçu pour rouler sur des sols non enneigés.

D'autres caractéristiques et avantages de l'invention ressortiront de la description suivante, donnée à titre d'exemple, sans caractère limitatif, en regard des dessins annexés sur lesquels :
- la figure 1 représente une vue partielle de la surface de roulement d'une bande de roulement selon l'invention, ladite bande de roulement comportant une pluralité de lames ;
- la figure 2 représente schématiquement une vue en perspective d'une lame de la bande de roulement de la figure 1, conformément à un premier mode de réalisation de l'invention ;
- les figures 3a, 3b, 3c, 3d représentent les différentes étapes d'un procédé de démoulage d'un élément moulant permettant le moulage d'une cavité dans la lame de la figure 2 ;
- la figure 4 représente schématiquement une vue en coupe d'une lame de la bande de roulement de la figure 1, conformément à un second mode de réalisation de l'invention ;
- la figure 5 représente schématiquement une vue en perspective d'une lame de la bande de roulement de la figure 1, conformément à un troisième mode de réalisation de l'invention ;
- la figure 6 représente schématiquement une vue en perspective d'une lame de la bande de roulement de la figure 1, conformément à un quatrième mode de réalisation de l'invention ;
- la figure 7 représente schématiquement une vue en perspective d'une pluralité de lames agencées selon un premier mode d'agencement ;
- la figure 8 représente schématiquement une vue en perspective d'une pluralité de lames agencées selon un seconde mode d'agencement.

L'invention est ici décrite pour des blocs ayant une forme globalement parallélépipédique présentant un grand élancement, c'est-à-dire que les blocs ont une grande longueur et une grande hauteur pour une largeur faible relativement à cette hauteur et à cette largeur. Ces blocs particuliers sont appelés lames dans la suite de la description. Toutefois, on notera d'emblée que l'invention n'est pas limitée aux lames mais peut s'étendre à des blocs présentant un tout autre rapport entre leur longueur, leur hauteur et leur largeur.

Dans la description qui va suivre, des éléments sensiblement identiques ou similaires seront désignés par des références identiques.

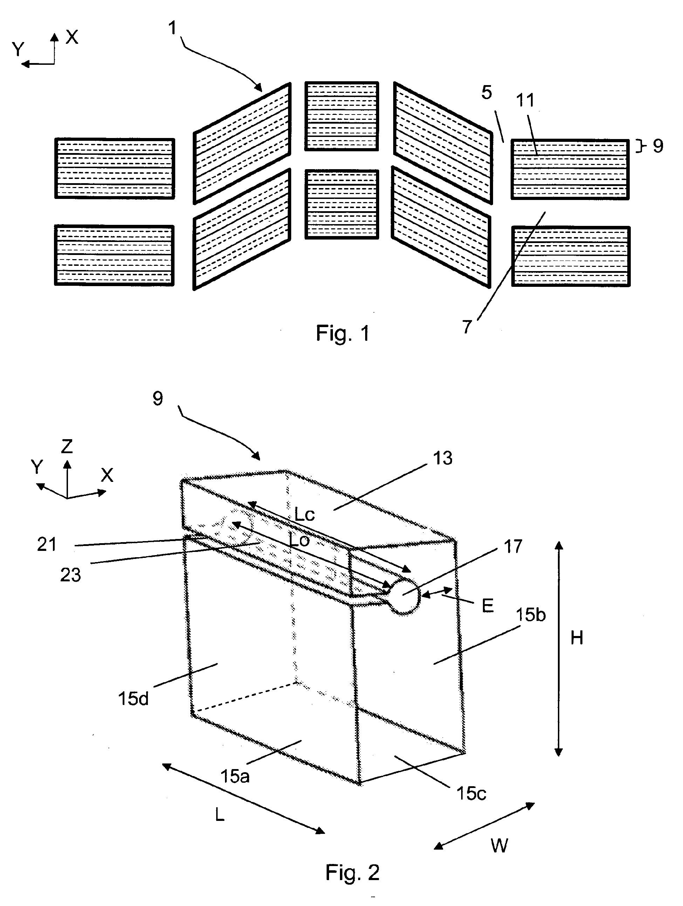

La figure 1 représente une vue partielle d'une surface de roulement d'une bande de roulement 1 comprenant une pluralité de lames 9 délimitées par des découpures (« cut-out » en anglais) 5, 7, 11. Les découpures 5, 7, 11 débouchent sur la surface de roulement.

La figure 2 représente schématiquement une vue en perspective d'une lame 9 de la figure 1 conformément à un premier mode de réalisation de l'invention.

La lame 9 comprend une face de contact 13 destinée à être en contact avec une chaussée.

La lame 9 comprend également une première face latérale 15a, une seconde face latérale 15b, une troisième face latérale 15c et une quatrième face latérale 15d. La première face latérale 15a s'étend ici selon une direction transversale Y. La seconde face latérale 15b s'étend parallèlement à la première face latérale 15a. La troisième face latérale 15c s'étend selon une direction circonférentielle X, perpendiculairement à la première face latérale 15a. La quatrième face latérale 15d s'étend parallèlement à la troisième face latérale 15c. Chacune des faces latérales 15a, 15b, 15c, 15d coupe la face de contact 13.

La lame présente une largeur W entre la première face latérale 15a et la seconde face latérale 15b. La lame présente également une longueur L entre la troisième face latérale 15c et la quatrième face latérale 15d et la longueur L de la lame est supérieure à la largeur W de la lame. La lame 9 présente également une hauteur H déterminée entre la face de contact 13 et le fond des découpures délimitant la lame. La hauteur H est par exemple égale à trois fois la largeur W de la lame 9.

La lame 9 comprend une cavité 17 ayant ici une forme globalement cylindrique. Dans une variante de réalisation, la cavité 17 présente une forme non cylindrique, telle qu'une forme parallélépipédique.

La cavité 17 est disposée à l'intérieur de la lame 9 sous la face de contact 13. Ainsi, à l'état neuf de la bande de roulement, la cavité 17 ne débouche pas sur la face de contact 13 de la lame 9.

Dans l'exemple de la figure 2, la cavité 17 s'étend principalement dans la longueur L de la lame 9 et la cavité 17 débouche sur la troisième face latérale 15c et la quatrième face latérale 15d et la longueur Lc de la cavité correspond à la longueur L de la lame. En variante, la cavité 15 ne débouche pas sur ces faces latérales 15c, 15d. Dans une autre variante, la cavité ne débouche que sur une seule de ces faces latérales 15c, 15d.

La lame 9 comprend également une incision 21. L'incision 21 s'étend principalement dans la longueur L de la lame 9. L'incision 21 débouche sur la première face latérale du bloc 15a et dans la cavité 17. En débouchant dans la cavité, l'incision forme une ouverture 23 représentée partiellement en pointillés sur la figure 2. La longueur Lo de l'ouverture correspondant au moins à 80% de la longueur Lc de la cavité 17. Dans le cas de la figure 2, la longueur Lo de l'ouverture, la longueur Lc de la cavité et la longueur L de la lame sont identiques.

On notera que l'épaisseur de matière E entre la cavité 17 et la seconde face latérale 15b est supérieure ou égale à 1/3 de la largeur W de la lame 9.

On notera également que la largeur de l'incision 21, c'est-à-dire la distance séparant deux parois délimitant l'incision, est ici inférieure à 1 mm.

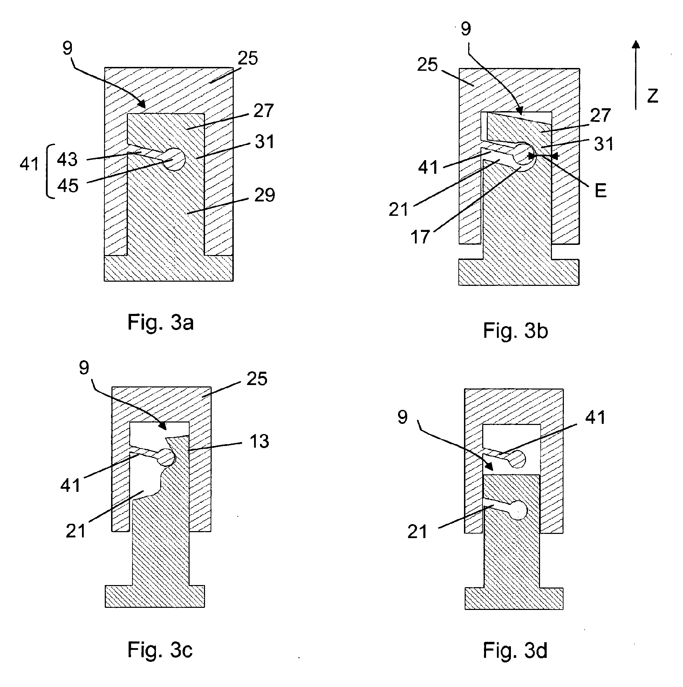

Les figures 3a, 3b, 3c, 3d représentent les différentes étapes d'un procédé de démoulage d'un élément moulant hors de la lame 9.

L'élément moulant 41 est monté sur un moule de vulcanisation 25.

L'élément moulant 41 comprend une première partie 43 destinée à mouler l'incision 21 dans la lame 9. La première partie 43 est solidaire du moule de vulcanisation 25.

L'élément moulant comprend également une seconde partie 45 reliée à la première partie 43. La seconde partie 45 est destinée à mouler la cavité 17 dans la lame 9.

La première étape, représentée à la figure 3a, présente la position de l'élément moulant dans la lame 9 suite à la vulcanisation de la bande de roulement.

Dans cette première étape, l'élément moulant 41 sépare partiellement la lame 9 en une partie supérieure 27 et une partie inférieure 29. Une partie de liaison 31 relie la partie supérieure 27 à la partie inférieure 29 de la lame 9.

Dans la seconde étape représentée à la figure 3b, le moule de vulcanisation 25 s'ouvre pour permettre le retrait de la bande de roulement moulée et vulcanisée. L'élément moulant 23 effectue alors un mouvement de déplacement relatif selon une direction radiale Z par rapport à la lame 9. Dans cette seconde étape, l'élément moulant 23 se décolle de la cavité 17 et de la fente 21 formées par ledit élément moulant.

Une forte sollicitation s'exerce sur la partie de liaison 31 au cours de cette seconde étape. Afin d'éviter que l'élément moulant 23 ne vienne arracher tout ou partie de la lame 9, il est nécessaire de dimensionner de manière adéquate l'épaisseur E de la partie de liaison 31.

Dans la troisième étape représentée à la figure 3c, l'élément moulant 23 est dans une position dans laquelle il ouvre largement la fente 21. Dans cette position, la face de contact 13 de la lame 9 est plaquée contre la partie interne du moule de vulcanisation 25.

Dans la quatrième étape représentée à la figure 3d, l'élément moulant 23 est sorti de la fente 21. La lame 9 est alors dans une position de repos.

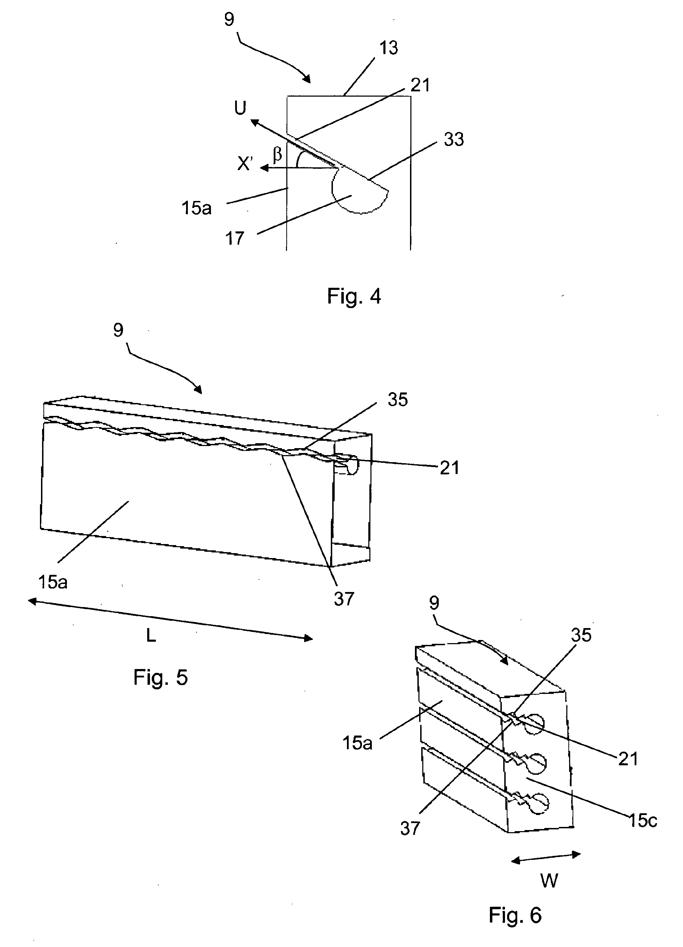

La figure 4 représente schématiquement une vue en coupe d'une lame 9 de la figure 1 conformément à un second mode de réalisation.

Dans ce mode de réalisation, l'incision 21 forme un angle β non nul avec une direction X' perpendiculaire à la première face latérale 15a de la lame 9. L'incision 21 s'étend, en partant de la cavité 17, selon une direction U ayant une composante radiale dirigée vers la face de contact 13 de la lame 9.

Dans un mode de réalisation préférentiel, l'angle β est compris entre 30° et 60°. Préférentiellement, l'angle β est de 45°. On facilite ainsi le démoulage de l'élément moulant tout en limitant le risque d'arrachement de la gomme lors du retrait de cet élément moulant.

De manière préférentielle, la cavité 17 comporte une partie en forme de rampe 33 disposée dans le prolongement de l'incision 21. Cette partie en forme de rampe 33, améliore encore le démoulage de l'élément moulant.

En variante, la partie en forme de rampe 33 peut être combinée avec un angle β compris dans un intervalle différent de l'intervalle allant de 30° à 60°. Par exemple, l'angle β est nul.

La figure 5 représente schématiquement une vue en perspective de la lame 9 de la figure 1, conformément à un troisième mode de réalisation.

Dans ce mode de réalisation, l'incision 21 débouche sur la première face latérale 15a. L'incision 21 présente un profil ondulé sur cette première face latérale.

L'incision 21 est délimitée par une première surface 35 et par une seconde surface 37. Grâce au profil ondulé de l'incision 21, il est possible de bloquer, dans la longueur L de la lame 9, tout ou partie des mouvements relatifs de la première surface 35 par rapport à la seconde surface 37 au cours d'un roulage de la bande de roulement.

La figure 6 représente schématiquement une vue en perspective de la lame 9 de la figure 1, conformément à un quatrième mode de réalisation.

Dans ce mode de réalisation, l'incision 21 a un profil ondulé dans un plan orthogonal à la première face latérale 15a, par exemple dans le plan de la troisième face latérale 15c.

L'incision 21 est délimitée par une première surface 35 et par une seconde surface 37. Grâce à ce profil ondulé, il est possible de bloquer, dans la largeur W de la lame 9, tout ou partie des mouvements relatifs de la première surface 35 par rapport à la seconde surface 37.

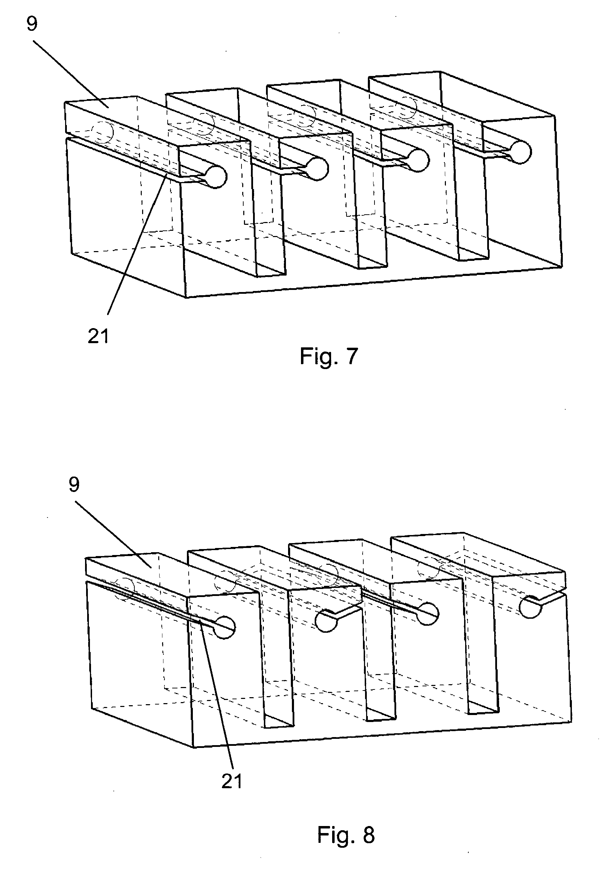

La figure 7 représente schématiquement une vue en perspective d'une pluralité de lames 9 agencées selon un premier mode d'agencement. Dans ce mode d'agencement, toutes les incisions 21 des lames 9 débouchent d'un même côté par rapport auxdites lames 9.

On notera que dans ce mode de réalisation, l'angle β, tel qu'il a été défini à la figure 4, est nul.

La figure 8 représente schématiquement une vue en perspective d'une pluralité de lames 9 agencées selon un second mode d'agencement. Dans ce mode d'agencement, les incisions 21 des lames 9 débouchent de manière alternée soit d'un premier côté par rapport auxdites lames soit d'un second côté par rapport auxdites lames.

## Revendications

1. Bande de roulement pour pneumatique comportant une pluralité de blocs (9) délimités par des découpures (5, 7, 11), chaque bloc comprenant des faces latérales (15a, 15b) coupant une face de contact (13) dudit bloc, chaque bloc (9) ayant globalement une forme parallélépipédique et présentant une longueur (L) et une largeur (W), ladite largeur (W) étant déterminée entre une première face latérale (15a) du bloc et une seconde face latérale (15b) du bloc, ladite largeur (W) étant inférieure à ladite longueur (L), au moins un bloc (9) parmi la pluralité de blocs comprend au moins une cavité (17) disposée à l'intérieur dudit bloc, ladite cavité s'étendant principalement dans la longueur (L) dudit bloc, **caractérisée en ce que** ladite bande de roulement comprend une incision (21) s'étendant principalement dans la longueur (L) dudit bloc, ladite incision débouchant sur la première face latérale (15a) du bloc et ladite incision (21) débouchant dans la cavité (17) en formant une ouverture (23), la longueur (Lo) de l'ouverture déterminée dans la longueur (L) du bloc correspondant au moins à 80% de la longueur (Lc) de la cavité déterminée dans la longueur (L) dudit bloc, ladite incision (21) ne débouchant pas sur la face de contact (13) du bloc.

2. Bande de roulement selon la revendication 1 **caractérisée en ce que** l'épaisseur de matière (E) entre la cavité et la seconde face latérale (15b) du bloc est supérieure ou égale à 1/3 de la largeur (W) du bloc.

3. Bande de roulement selon l'une quelconque des revendications 1 à 2 **caractérisée en ce que** ladite incision forme un angle (β) compris entre 30° et 60° avec une direction (X') perpendiculaire à ladite première face latérale (15a) du bloc et, en partant de la cavité (17), l'incision s'étend selon une direction (U) ayant une composante radiale dirigée vers ladite face de contact (13).

4. Bande de roulement selon l'une quelconque des revendications 1 à 3 **caractérisée en ce que** la cavité comporte une partie en forme de rampe (33) disposée dans le prolongement de l'incision (21).

5. Bande de roulement selon l'une quelconque des revendications 1 à 4, **caractérisée en ce que** l'incision a un profil ondulé sur la première face latérale (15a).

6. Bande de roulement selon l'une quelconque des revendications 1 à 5, **caractérisée en ce que** l'incision a un profil ondulé dans un plan orthogonal à la première face latérale (15a).

7. Bande de roulement selon l'une quelconque des revendications 1 à 6, **caractérisée en ce que** toutes les incisions des blocs de la pluralité de blocs débouchent d'un même côté par rapport auxdits blocs.

8. Bande de roulement selon l'une quelconque des revendications 1 à 6, **caractérisée en ce que** les incisions des blocs de la pluralité de blocs débouchent de manière alternée soit d'un premier côté par rapport auxdits blocs soit d'un second côté par rapport auxdits blocs.

9. Bande de roulement selon l'une quelconque des revendications 1 à 8, **caractérisée en ce que** chaque bloc de la pluralité de blocs a une hauteur (H) supérieure ou égale à trois fois la largeur (W) dudit bloc.

10. Bande de roulement selon l'une quelconque des revendications 1 à 9, **caractérisée en ce que** les blocs de la pluralité de blocs forment des lames, tout ou partie desdites lames ayant leur longueur orientée principalement selon une direction transversale (Y).

11. Pneumatique comportant une bande de roulement selon l'une quelconque des revendications 1 à 10.

12. Pneumatique selon la revendication 11, **caractérisé en ce que** ledit pneumatique est un pneumatique neige.

## Patentansprüche

1. Laufstreifen für einen Luftreifen, der eine Vielzahl von durch Ausschnitte (5, 7, 11) begrenzten Blöcken (9) aufweist, wobei jeder Block Seitenflächen (15a, 15b) enthält, die eine Kontaktseite (13) des Blocks schneiden, wobei jeder Block (9) global eine parallelepipedische Form hat und eine Länge (L) und eine Breite (W) aufweist, wobei die Breite (W) zwischen einer ersten Seitenfläche (15a) des Blocks und einer zweiten Seitenfläche (15b) des Blocks festgelegt wird, wobei die Breite (W) kleiner ist als die Länge (L), wobei mindestens ein Block (9) der Vielzahl von Blöcken mindestens einen im Inneren des Blocks angeordneten Hohlraum (17) enthält, wobei der Hohlraum sich hauptsächlich in der Länge (L) des Blocks erstreckt, **dadurch gekennzeichnet, dass** der Laufstreifen einen Einschnitt (21) enthält, der sich hauptsächlich in der Länge (L) des Blocks erstreckt, wobei der Einschnitt an der ersten Seitenfläche (15a) des Blocks mündet, und der Einschnitt (21) in den Hohlraum (17) mündet, indem er eine Öffnung (23) formt, wobei die Länge (Lo) der in der Länge (L) des Blocks festgelegten Öffnung mindestens 80% der Länge (Lc) des in der Länge (L) des Blocks festgelegten Hohlraums entspricht, wobei der Einschnitt (21) nicht an der Kontaktseite (13) des Blocks mündet.

2. Laufstreifen nach Anspruch 1, **dadurch gekennzeichnet, dass** die Materialdicke (E) zwischen dem Hohlraum und der zweiten Seitenfläche (15b) des Blocks größer als oder gleich 1/3 der Breite (W) des Blocks ist.

3. Laufstreifen nach einem der Ansprüche 1 bis 2, **dadurch gekennzeichnet, dass** der Einschnitt einen Winkel (β) zwischen 30° und 60° mit einer Richtung (X') lotrecht zur ersten Seitenfläche (15a) des Blocks bildet, und der Einschnitt sich ausgehend vom Hohlraum (17) in einer Richtung (U) erstreckt, die eine zur Kontaktseite (13) gerichtete radiale Komponente hat.

4. Laufstreifen nach einem der Ansprüche 1 bis 3, **dadurch gekennzeichnet, dass** der Hohlraum einen Teil in Form einer Rampe (33) aufweist, die in der Verlängerung des Einschnitts (21) angeordnet ist.

5. Laufstreifen nach einem der Ansprüche 1 bis 4, **dadurch gekennzeichnet, dass** der Einschnitt auf der ersten Seitenfläche (15a) ein gewelltes Profil hat.

6. Laufstreifen nach einem der Ansprüche 1 bis 5, **dadurch gekennzeichnet, dass** der Einschnitt in einer Ebene orthogonal zur ersten Seitenfläche (15a) ein gewelltes Profil hat.

7. Laufstreifen nach einem der Ansprüche 1 bis 6, **dadurch gekennzeichnet, dass** alle Einschnitte der Blöcke der Vielzahl von Blöcken auf der gleichen Seite bezüglich der Blöcke münden.

8. Laufstreifen nach einem der Ansprüche 1 bis 6, **dadurch gekennzeichnet, dass** die Einschnitte der Blöcke der Vielzahl von Blöcken abwechselnd entweder auf einer ersten Seite bezüglich der Blöcke oder auf einer zweiten Seite bezüglich der Blöcke münden.

9. Laufstreifen nach einem der Ansprüche 1 bis 8, **dadurch gekennzeichnet, dass** jeder Block der Vielzahl von Blöcken eine Höhe (H) hat, die größer als das oder gleich dem Dreifachen der Breite (W) des Blocks ist.

10. Laufstreifen nach einem der Ansprüche 1 bis 9, **dadurch gekennzeichnet, dass** die Blöcke der Vielzahl von Blöcken Lamellen formen, wobei die Länge aller oder eines Teils der Lamellen hauptsächlich in einer Querrichtung (Y) ausgerichtet ist.

11. Luftreifen, der einen Laufstreifen nach einem der Ansprüche 1 bis 10 aufweist.

12. Luftreifen nach Anspruch 11, **dadurch gekennzeichnet, dass** der Luftreifen ein Winterreifen ist.

## Claims

1. Tyre tread comprising a plurality of ribs (9) delimited by cut-outs (5, 7, 11), each rib comprising lateral faces (15a, 15b) cutting a contact face (13) of the said rib, each rib (9) having a generally parallelepipedal shape and having a length (L) and a width (W), the said width (W) being determined between a first lateral face (15a) of the rib and a second lateral face (15b) of the rib, the said width (W) being less than the said length (L), at least one rib (9) out of the plurality of ribs comprises at least one cavity (17) placed inside the said rib, the said cavity extending mainly in the length (L) of the said rib, **characterized in that** the said tread comprises an incision (21) extending mainly in the length (L) of the said rib, the said incision emerging on the first lateral face (15a) of the rib and the said incision (21) emerging in the cavity (17) while forming an opening (23), the length (Lo) of the opening determined in the length (L) of the rib corresponding at least to 80% of the length (Lc) of the cavity determined in the length (L) of the said rib, the said incision (21) not emerging on the contact face (13) of the rib.

2. Tread according to Claim 1, **characterized in that** the thickness of material (E) between the cavity and the second lateral face (15b) of the rib is greater than or equal to 1/3 of the width (W) of the rib.

3. Tread according to either one of Claims 1 and 2, **characterized in that** the said incision forms an angle (β) of between 30° and 60° with a direction (X') perpendicular to the said first lateral face (15a) of the rib, and, starting from the cavity (17), the incision extends in a direction (U) having a radial component directed towards the said contact face (13).

4. Tread according to any one of Claims 1 to 3, **characterized in that** the cavity comprises a portion in the form of a ramp (33) placed in the extension of the incision (21).

5. Tread according to any one of Claims 1 to 4, **characterized in that** the incision has an undulating profile on the first lateral face (15a).

6. Tread according to any one of Claims 1 to 5, **characterized in that** the incision has an undulating profile in a plane orthogonal to the first lateral face (15a) .

7. Tread according to any one of Claims 1 to 6, **characterized in that** all the incisions of the ribs of the plurality of ribs emerge on one and the same side relative to the said ribs.

8. Tread according to any one of Claims 1 to 6, **characterized in that** the incisions of the ribs of the plurality of ribs emerge alternately either on a first side relative to the said ribs or on a second side relative to the said ribs.

9. Tread according to any one of Claims 1 to 8, **characterized in that** each rib of the plurality of ribs has a height (H) greater than or equal to three times the width (W) of the said rib.

10. Tread according to any one of Claims 1 to 9, **characterized in that** the ribs of the plurality of ribs form strips, some or all of the said strips having their length oriented mainly in a transverse direction (Y).

11. Tyre comprising a tread according to any one of Claims 1 to 10.

12. Tyre according to Claim 11, **characterized in that** the said tyre is a snow tyre.
